# EUROPEAN PATENT SPECIFICATION

(11) **EP 3 624 064 B1**
(45) Date of publication and mention of the grant of the patent: **02.09.2026**
(21) Application number: 18837511.7
(22) Date of filing: 19.07.2018
(51) Int. Cl.: G06V 10/10, G06V 20/56

(54) **VEHICLE-MOUNTED ENVIRONMENT RECOGNITION DEVICE**
FAHRZEUGMONTIERTE UMGEBUNGSERKENNUNGSVORRICHTUNG
DISPOSITIF DE RECONNAISSANCE D'ENVIRONNEMENT MONTÉ SUR VEHICULE

(30) Priority: 28.07.2017 JP 2017146052
(43) Date of publication of application: 18.03.2020
(73) Proprietor: Astemo, Ltd., Tokyo 100-0004 (JP)
(72) Inventor: TAKEMURA Masayuki, Tokyo 100-8280 (JP); MONJI Tatsuhiko, Hitachinaka-shi Ibaraki 312-8503 (JP); NONAKA Shinichi, Hitachinaka-shi Ibaraki 312-8503 (JP); SHIMA Takeshi, Tokyo 100-8280 (JP)
(74) Representative: Manitz Finsterwald Patent- und Rechtsanwaltspartnerschaft mbB
(86) International application number: PCT/JP2018/027036
(87) International publication number: WO 2019/021925

(56) References cited:
- JP-A- 2003 227 725
- JP-A- 2013 508 844
- US-A1- 2005 237 385
- THAO DANG ET AL: "Continuous Stereo Self-Calibration by Camera Parameter Tracking", IEEE TRANSACTIONS ON IMAGE PROCESSING, IEE SERVICE CENTER , PISCATAWAY , NJ, US, vol. 18, no. 7, 1 July 2009 (2009-07-01), pages 1536 - 1550, XP011269224, ISSN: 1057-7149, DOI: 10.1109/TIP.2009.2017824

## Description

### Technical Field

The present invention relates to a vehicle-mounted surrounding environment recognition device.

### Background Art

The present invention relates to a vehicle-mounted camera that recognizes the environment surrounding a vehicle with two cameras mounted to the vehicle. As the commercialization of preventative safety technologies becomes more prevalent, it is also becoming important to create sensing technologies such as vehicle-mounted cameras, millimeter-wave radar, and laser radar at low cost. The present invention relates to a sensing technology that utilizes a camera (imaging unit) to recognize the environment surrounding a vehicle, and more particularly, to a method for an algorithm that utilizes camera information from two viewpoints to recognize a three-dimensional obstacle, in which the method corrects or compensates and allows for positional misalignment of the two viewpoints.

JP 2014-74632 A (PTL 1) discloses a vehicle-mounted stereo camera calibration device and calibration method that correct positional misalignment of the left and right cameras of a stereo camera while traveling.

### Citation List

### Patent Literature

PTL 1: JP 2014-74632 A

US 2005/0237385 A1 discloses a stereo camera supporting apparatus in which posture or position of a stereo camera relative to a car is controlled such that a contour is held at a certain portion of the image frame when the car moves.

The article "Continuous Stereo Self Calibration ..." by Thao and others, XP011269224, discloses the use of a recursive optimization algorithm.

### Summary of Invention

### Technical Problem

A camera mounted to a vehicle is utilized to estimate the three-dimensional shape of an obstacle. At this time, if the positional relationship obtained between a plurality of camera positions is known in advance, the processing when reconstructing the three-dimensional shape becomes extremely easy, while at the same time, the three-dimensional shape can be reconstructed with high precision. However, through the use of cheap components, error at the individual camera level such as deformation due to temperature change, inconsistent image quality, and manufacturing inconsistencies are expected, and furthermore, in cases where the camera is carelessly attached to the body of the vehicle, the relative positions of the body of the vehicle become misaligned, and phenomena such as vibration and bending occur.

By using high-precision components and precise assembly it is possible to manufacture a camera with low initial error as well as low geometry error and sensitivity error during use. However, the cost tends to rise. Also, with regard to error that occurs gradually over somewhat long periods of time while traveling, PTL 1 describes how to correct relative error that occurs between two cameras by using left and right correspondence points. However, there is no description of a method of dealing with geometry error that occurs over a shorter period or in individual frames and error that still remains after correction, or a method of dealing with sensitivity error, and if three-dimensional reconstruction is performed as-is, a variety of problems such as a failure to obtain a dense three-dimensional shape and low precision occur.

It is the object of the invention to provide a vehicle-mounted surrounding environment recognition device exhibiting improved accuracy in stereo matching of stereo images.

### Solution to Problem

The above object is accomplished by the features of claim 1.

A vehicle-mounted surrounding environment recognition device includes the features of claim 1. It comprises stereo imaging units, an error management unit that estimates error in the imaging unit when obtaining a three-dimensional shape on a basis of viewpoints of the imaging unit, and a matching unit that selects a matching method according to a result of the estimation by the error management unit. Claim 1 recites further features.

### Advantageous Effects of Invention

The vehicle-mounted surrounding environment recognition device according to the present invention enables reconstruction of a high-density three-dimensional shape with high precision, and improvement of the recognition rate of an object recognized on the basis of the reconstruction.

### Brief Description of Drawings

[FIG. 1] FIG. 1 illustrates a vehicle-mounted environment recognition device.
[FIG. 2] FIG. 2 illustrates a stereo camera unit.
[FIG. 3] FIG. 3 illustrates a calibration-use correspondence point retrieval unit.
[FIG. 4] FIG. 4 illustrates an error management unit.

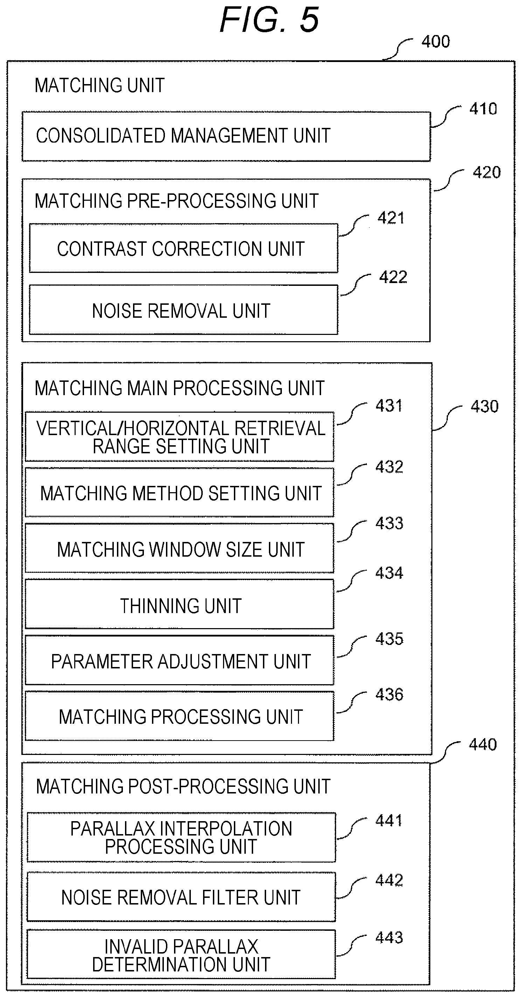

[FIG. 5] FIG. 5 illustrates a matching unit.

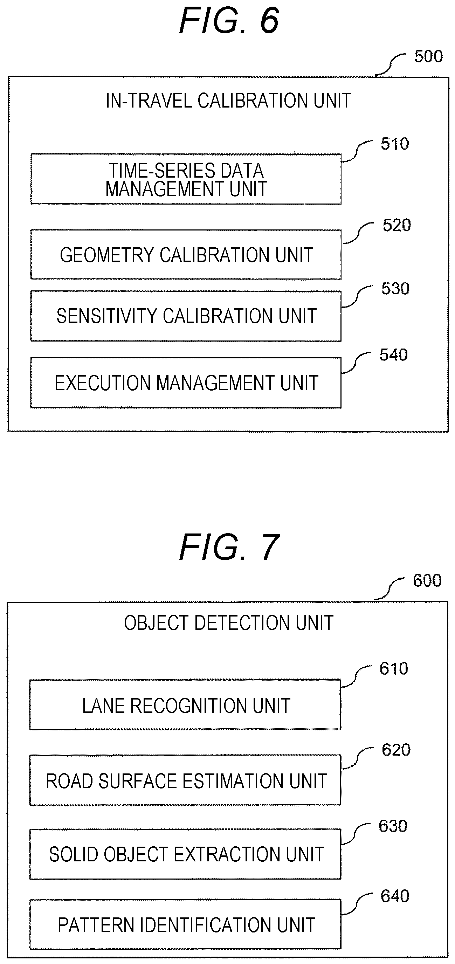

[FIG. 6] FIG. 6 illustrates an in-travel calibration unit. [FIG. 7] FIG. 7 illustrates an object detection unit.

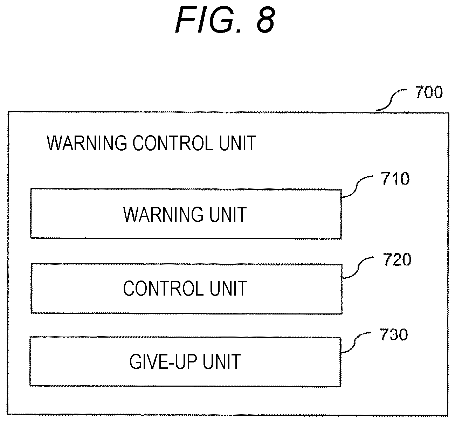

[FIG. 8] FIG. 8 illustrates a warning control unit.
[FIG. 9] FIG. 9 illustrates exposure adjustment.
[FIG. 10] FIG. 10 illustrates a calibration-use processing region.
[FIG. 11] FIG. 11 illustrates a feature point extraction result.
[FIG. 12] FIG. 12 is a diagram for explaining feature points.
[FIG. 13] FIG. 13 illustrates an error variation table due to temperature change.
[FIG. 14] FIG. 14 illustrates time management.
[FIG. 15] FIG. 15 illustrates a consolidated management unit.
[FIG. 16] FIG. 16 illustrates a basic principle of matching.
[FIG. 17] FIG. 17 illustrates matching thinning.
[FIG. 18] FIG. 18 illustrates a matching method Z.
[FIG. 19] FIG. 19 illustrates a matching method X.
[FIG. 20] FIG. 20 illustrates a process flowchart.

### Description of Embodiments

To control a vehicle more safely and comfortably, the vehicle-mounted surrounding environment recognition device of the present invention utilizes a camera to sense the environment surrounding the vehicle, and outputs information required for control of the vehicle and for issuing warnings.

Particularly, when a three-dimensional shape is analyzed with a stereo camera, error due to texture disparity occurs. This is an effect based on the basic principle of a stereo camera, and stereo matching performs matching on the basis of the features of textures inside a matching window. For this reason, during matching, in cases where a region of near-uniform brightness with little or no features and a region with large brightness differences and many features exist inside the matching window, a three-dimensional measurement result that matches the region with many features is obtained, even though the matching window has been set. Consequently, even though then intention is to compute the three-dimensional result of the center of the matching window, the matching matches the region of more texture, and error is produced in the measured three-dimensional result.

Hereinafter, Examples will be described using the diagrams.

### Example 1

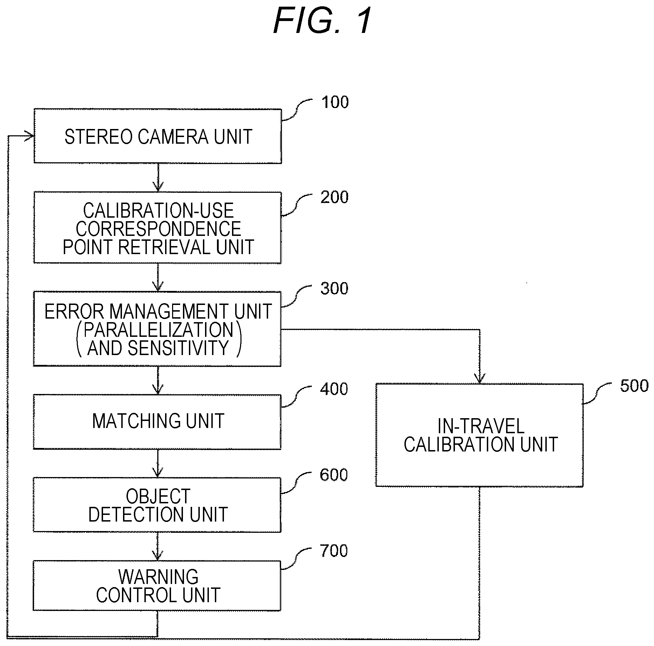

### <FIG. 1: vehicle-mounted environment recognition device>

FIG. 1 illustrates a configuration diagram of the vehicle-mounted environment recognition device. Cameras arranged in parallel from left to right are used as a stereo camera to recognize the environment surrounding the vehicle. In a stereo camera unit 100, left and right images taken by left and right cameras are used. To performing stereo matching using the right image as a base, properties such as the sensitivity and geometry are coordinated basically using the right side as a base of reference. In the stereo camera unit, pre-processing for matching is performed in coordination with the imaging by the left and right cameras. In a calibration-use correspondence point retrieval unit 200, features points in the left and right images are retrieved from the images, and these feature points are searched to retrieve left and right correspondence points that correspond with each other between the left and right images, which are used to check whether or not the alignment of the left and right images is being kept in the correct state, and also used when estimating the degree to which the left and right images are misaligned. In an error management unit 300, error of the left and right cameras is managed. The above result of the calibration-use correspondence point retrieval unit 200 is one piece of information for error estimation. Besides this piece of information, information such as the measurement result of a thermometer installed inside the cameras, exposure information such as the shutter time and gain of the stereo camera unit 100, a track estimation result such as a result of estimating the lane or road surface, a light source environment estimation result, and a weather estimation result are also used to estimate and manage noise factors for sensitivity error and geometry error occurring in the left and right cameras. Noise factors that influence stereo matching and a basis for judging how to perform the stereo matching method are managed herein. On the basis of the above results of the error management unit 300, an appropriate stereo matching method is selected in the matching unit. By selecting an appropriate method according to the conditions in each of the pre-processing, main processing, and post-processing for stereo matching, it is possible to suppress drops in parallax precision and parallax density and recognize more accurate and denser three-dimensional shapes, even in conditions in which the parallax precision or the parallax density ordinarily would be reduced.

An in-travel calibration unit 500 ascertains the change over time in the geometry error of the left and right cameras while accumulating a time series of the results from the calibration-use correspondence point retrieval unit 200. By monitoring over a long period of time, the in-travel calibration unit 500 accurately and consistently corrects error such as relative geometry error between the left and right cameras that occurs gradually. The corrections and the like are fed back to units such as the error management unit 300.

An object detection unit 600 performs solid object extraction by utilizing a road surface estimation unit used for lane recognition to issue lane deviation warnings and for finding the ground position of solid object detection, and furthermore by utilizing three-dimensional information obtained by stereo matching from the left and right cameras of the stereo camera, and detects whether the solid object is a car, a person, or a bicycle. On the basis of these detection results, a warning control unit 700 issues preventative safety warnings and performs vehicle control. Also, in cases where the state of the left and right cameras has too much geometry or sensitivity error to perform stereo matching, sensing is given up.

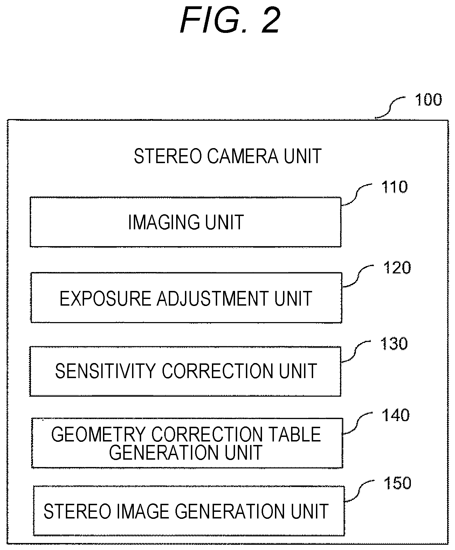

### <FIG. 2: stereo camera unit 100>

The stereo camera unit 100 performs pre-processing for performing three-dimensional reconstruction using images taken by the plurality of cameras. The relative positional relationship between the two cameras is known at least before being utilized for three-dimensional reconstruction, and even if the precision is low before product shipment, it is assumed that a rough sensitivity and geometry calibration has been performed in advance.

The sensitivity calibration referred to herein is for making the image quality of the images taken by the two cameras consistent with each other to raise the matching accuracy between the two cameras. For example, to make the brightness even between the two cameras, the brightness offset and gain are adjusted, a check for faulty image sensors is performed, and lens condensing properties whereby the image becomes darker towards the periphery of the lens are corrected. These corrections have respectively different left and right correction values in a sensitivity correction unit 130, and after an imaging unit 110 takes images with the cameras, the sensitivity correction unit 130 performs corrections such that the sensitivity becomes similar between the plurality of cameras.

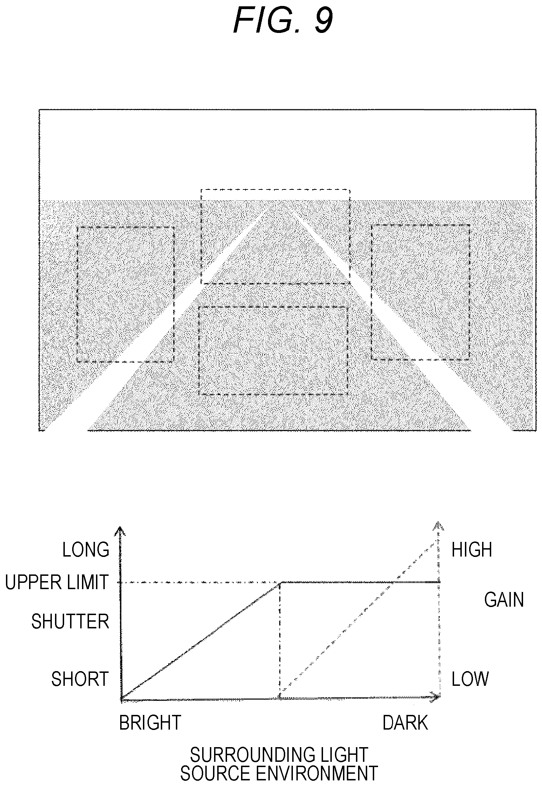

In an exposure adjustment unit 120, a base camera to act as a reference is decided from among the plurality of cameras, and the exposure conditions (shutter speed and gain) of the other camera or cameras are set in accordance with the exposure conditions of the base camera. With this arrangement, making the exposure conditions for imaging consistent among the plurality of cameras in advance has the effect of equalizing the brightness in images of the same subject, thereby making it possible to perform pre-processing such that features resemble each other in images of the same object imaged by the plurality of cameras. FIG. 9 illustrates a method of exposure adjustment. As illustrated in FIG. 9, objects to be recognized are considered to set processing regions for exposure adjustment in which brightness distributions are analyzed in regions containing the road surface, white lines, and vehicles ahead. The dashed regions in the image in the upper part of FIG. 9 indicate the processing regions for exposure adjustment. The brightness distributions inside the plurality of processing regions are analyzed and combined by applying weights to each region, and the average brightness level is used as a base of reference to change the exposure conditions to increase brightness in the case of a dark image and decrease brightness in the case of a bright image. The lower part of FIG. 9 illustrates a method of changing from the current exposure conditions. On the horizontal axis, the current exposure value is adjusted to move to the left when the surrounding light source environment is bright, and to move to the right when the surrounding light source environment is dark. For this change, it is assumed that the brightness adjustment is performed with the shutter only in cases where the current shutter speed has not reached an upper limit, whereas when the shutter reaches the upper limit, the shutter speed is kept fixed and the brightness is adjusted by the level of the gain. Because gain leads to degraded image quality, the diagram illustrates how gain is used as little as possible while basically adjusting the shutter time, and adjusting the gain only after the shutter time cannot be set any longer.

Note that information about the shutter speed and gain is also input into the error management unit 300. For example, it is known in advance that in the case of setting the shutter speed to the longest and the gain closest to maximum, the brightness of the camera will be drawn out to use for matching, and the image will be noisy. What these exposure conditions are also becomes a source of information for informing the error management unit.

An example is given in which exposure adjustment and sensitivity correction are performed in this way to use a plurality of cameras, particularly a vehicle-mounted stereo camera arranged from left to right in this Example, but the sensitivity correction between left and right cameras is performed simply in advance.

Also, similarly for the left image, as illustrated in FIG. 9, rectangular regions are set to contain substantially the same road surface, the brightness distributions weighted for each region are combined similarly to the right image, and the average brightness is computed to analyze left and right sensitivity inconsistencies. The analysis result of a single frame is used by a light source environment estimation unit 340, and in the case of making corrections, the sensitivity correction is performed by a simple sensitivity correction unit 380 on the basis of the analysis data. Furthermore, in a sensitivity calibration unit 530 of the in-travel calibration unit 500, by observing and managing sensitivity inconsistencies in a time series while traveling, analysis is performed to determine whether or not long-term left and right sensitivity inconsistencies are occurring and whether or not the reliability should be corrected. A final execution determination is made by an execution management unit 540.

Next, in a geometry correction table generation unit 140, a correction table for correcting lens distortion and relative position such that the images from the two cameras are made parallel is generated. A grid pattern for calibration or a calibration chart in which circles are arranged at equal intervals is imaged by the cameras, and the lens distortion of each individual camera is corrected. Next, the left and right cameras are made parallel in a state in which the two cameras are in a fixed positional relationship. By showing the two cameras the same calibration chart after installing the cameras at relative positions during commercialization, the relative positions of the left and right cameras are estimated and used as a basis to complete a correction table such that images from the left and right cameras are neatly parallel. In actuality, a table combining the lens distortion table and the parallelization table is generated by the geometry correction table generation unit 140, and geometry-corrected images are actually generated every frame by a stereo image generation unit 150.

However, with regard to the sensitivity and geometry correction described above, the content of a default correction performed before the cameras are shipped out as a product has been described. Although described in detail later, results from the calibration-use correspondence point retrieval unit 200 are used by the in-travel calibration unit 500 during travel to update the geometry correction table in a case in which geometry error of the left and right cameras occurring because of factors such as aging, temperature change, and vibration after product shipment is estimated to be equal to or greater than a certain threshold value with a reliability equal to or greater than a certain threshold value. There is also a method of making corrections by determining that a change by a predetermined correction coefficient is necessary because there is a large difference between the temperature at the time of the geometry calibration performed at the factory before the above camera shipment and the temperature when used with a car.

Also, similarly with regard to the sensitivity, in the case in which the amount of error occurring during use is estimated to be a certain threshold value or greater with a reliability of a certain threshold value or greater, if the correction is for a single frame, the light source environment estimation unit 340 aggregates and analyzes data to determine whether or not a correction should be applied, and the correction is performed by the simple sensitivity correction unit 380. Regarding the analysis of sensitivity error over a long period, data is accumulated in a time-series data management unit 510 of the in-travel calibration unit 500 and used as a basis by which the sensitivity calibration unit 530 determines whether or not to perform sensitivity calibration. Calibration is performed in the execution management unit 530 and reflected in an actual image by performing the sensitivity correction on an image from before stereo matching by changing the amount of correction by the sensitivity correction unit 130.

There are also several methods for estimating the amount of sensitivity error, one of which is change in the amount of noise and sensitivity characteristics due to temperature. The left and right sensitivity characteristics are measured in advance in a certain prescribed range of temperatures during factory calibration, and adjusted such that the left and right sensitivities become the same. However, if the temperature of these image sensors change, the amount of noise and the brightness distribution in the images taken on the CMOS will also be affected. Also, because these changes are reproducible according to temperature, a correction is performed to coordinate the brightness offset and gain such that the sensitivity characteristics of the left and right cameras are made uniform. In cases where such changes occur over time, whether or not to perform correction is determined by the in-travel calibration unit 500 which is capable of determining the reliability and whether or not changes should be made continuously. In the sensitivity calibration unit 530, correction values for coordinating the relative brightness offset and gain are decided, or correction values are decided by using correction coefficients based on the temperature difference to match the image quality at the time of the factory calibration. The application of the correction values to actual images is performed by the sensitivity correction unit 130. Particularly, in this case, because the amount of correction increases and the amount of error in the estimated error increases as the values diverge further from the time of the factory calibration, the temperature at the time of the factory calibration is set near the middle of the operating range and calibration is performed in a state with the temperature adjusted to be inside this range, thereby making it easier to deal with changes in sensitivity characteristics due to temperature changes while traveling. Furthermore, the sensitivity correction may also be performed according to the results of the current exposure adjustment.

The ordinary exposure adjustment itself decides exposure conditions, namely shutter and gain correction values, by analyzing the brightness distribution using the image from the master right camera as a base of reference. However, to also measure differences in the sensitivity characteristics between the left and right cameras, the in-travel calibration unit compares the brightness distributions of the left and right cameras and investigates whether or not correction should be performed while additionally comparing properties such as the difference in temperature between the left and right cameras.

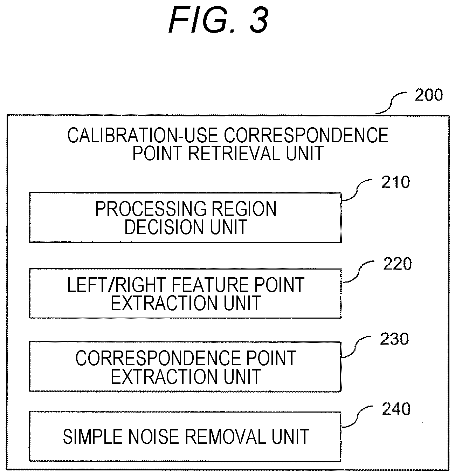

### <FIG. 3: calibration-use correspondence point retrieval unit 200>

In the calibration-use correspondence point retrieval unit 200, left and right correspondence points that act as basis data for ascertaining the misalignment in the relative positions of the left and right camera are extracted. The in-travel calibration unit 500 estimates the amount of error with respect to the determined relative positions of the left and right cameras for performing three-dimensional reconstruction with the current stereo camera, and in the case of determining that the amount of this geometry error is equal to or greater than a certain threshold with a reliability equal to or greater than a certain threshold value, the geometry correction table of corrections to be performed by the stereo camera unit 100 is changed on the basis of the geometry calibration values calculated by the in-travel calibration unit 500. With this arrangement, the cameras are corrected to have sensitivities and a parallel positional relationship that make stereo matching of the left and right camera images easier and cause the same object to appear the same as much as possible, thereby raising the parallax precision and the parallax density.

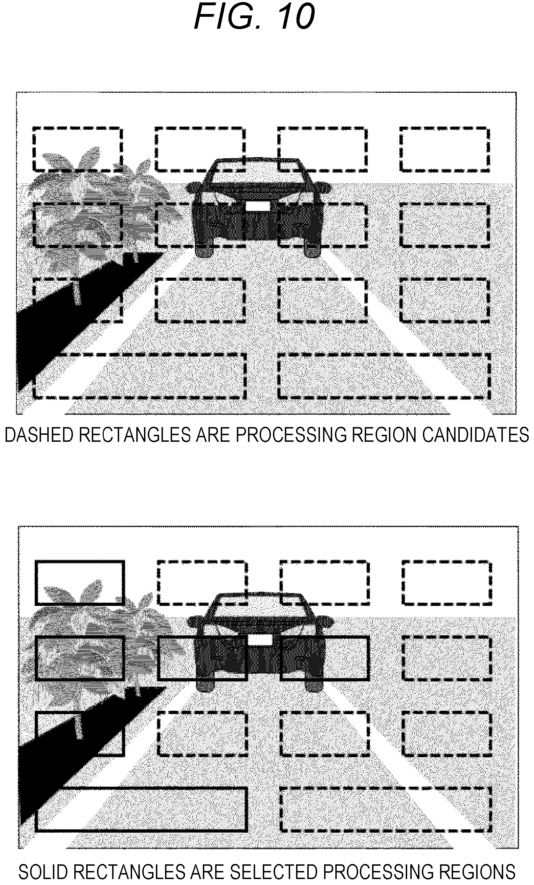

As illustrated in FIG. 10, in the calibration-use correspondence point retrieval unit 200, first, processing regions are decided by a processing region decision unit 210. It is desirable to acquire as much data about the left and right correspondence points from positions distributed over the image to make it easier to analyze the geometry of the left and right cameras. However, the extraction of correspondence points is a process with a high image processing load, and it is difficult to perform extraction over the entirety of the left and right images. Herein, the processing region decision unit 210 sets a plurality of predetermined rectangular regions distributed over the images in advance, and the image processing is performed inside the range of these regions. The dashed regions illustrated in FIG. 10 are processing region candidates, and in addition, when causing a CPU to perform correspondence point retrieval, this plurality of set processing regions candidates is narrowed down further. To easily choose processing regions from which many accurate feature points would be obtained with a simple process, the plurality of set processing regions are narrowed down further to the processing regions to use by selecting regions according to how many edges of a certain strength or greater are contained inside the processing region, and estimating the average strength of the edges equal to or greater than the threshold value. In the case in which 14 regions are set in advance and this number is 6 more than the number of processing regions selected according to the number and strength of the edges above, 6 processing regions dispersed throughout the picture are additionally selected. Causing a left/right feature point extraction unit to filter the processing regions in advance with a simple process has an effect of greatly reducing the overall processing time. Also, in the process itself, it is sufficient to decide the processing regions using either the left or the right image as a base of reference. Because the decided processing regions are set as left/right pairs, by deciding a region on the right side, the corresponding region on the left side is also used for feature point extraction. Utilizing time-series data to utilize left and right correspondence point information evenly from all over the images is important for calibration accuracy, and this process is performed mainly by the in-travel calibration unit 500.

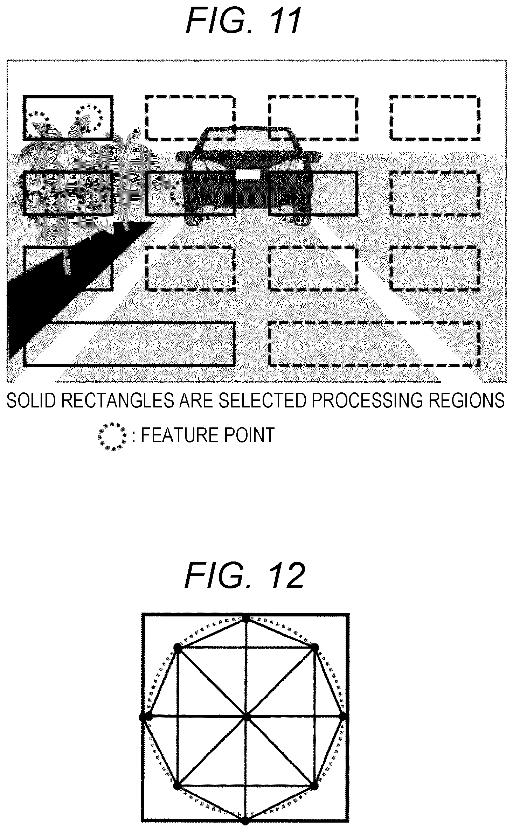

Next, in a left/right feature point extraction unit 220, feature points that precede taking the correspondence points are extracted from the processing regions selected by the processing region decision unit 210 above. Because these feature points are desirably points having a unique feature in the image, points are extracted where angles are formed by texture changes having brightness changes in each of the horizontal and vertical directions. As indicated by the dashed circle symbols in FIG. 11, feature points are extracted not only at linear brightness changes from patterns in the image, but also at corners where a brightness change occurs in orthogonal directions.

In the correspondence point extraction unit 230, feature quantities for each feature point are described, and it is determined whether or not the feature quantities resemble each other. As illustrated in FIG. 12, a feature quantity is obtained by, for example, taking the brightness differences between a center position and surrounding positions centered on the coordinates of a feature point, comparing these brightness differences to the brightness differences between the surrounding positions with each other, saving binary conversions of the values according to relative size as a binary data string, and treating the saved string as the feature quantity. The notation for such a feature quantity may also treat brightness differences as the feature quantity without converting to binary. Feature quantities are described from the surrounding pixels centered on feature points, and the similarity between these pieces of data are utilized by the correspondence point extraction unit 230 to retrieve left and right correspondence points. Because the points at the same corner of the same object in the left and right images are thought to have the same feature quantities, such feature quantities are described, and the points are extracted as correspondence points. By comparing these points, the feature quantities of feature points at the same corner in the images come to resemble each other, and therefore by comparing feature quantities, the same corners in the images can be determined and the left and right correspondence points are discovered.

However, with only the retrieval of correspondence points using the above feature quantities, there is a possibility that ineffective non-corresponding points will also be included. First, as a simple countermeasure against noise, with regard to non-corresponding points, there is a possibility of taking correspondence points at greatly distant positions in the left and right images. For this reason, one method of easily removing non-corresponding points is to have a simple noise removal unit 240 initially determine that correspondence points lying outside a permissible range of parallelization are non-corresponding points. Particularly, points which are greatly distant in the vertical direction of the image compared to nearby points are determined as noise.

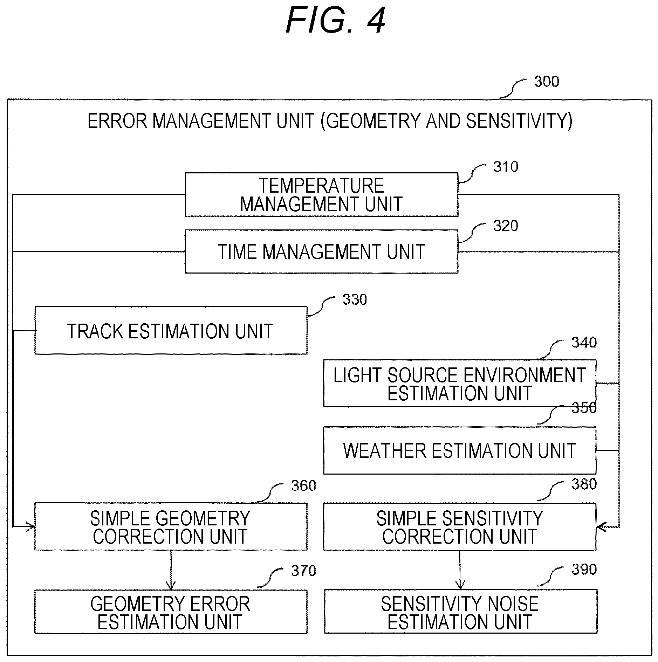

### <FIG. 4: error management unit 300>

Next, the error management unit (geometry and sensitivity) 300 will be described.

The function of the error management unit 300 is to individually analyze and manage factors that contribute to error in the stereo camera.

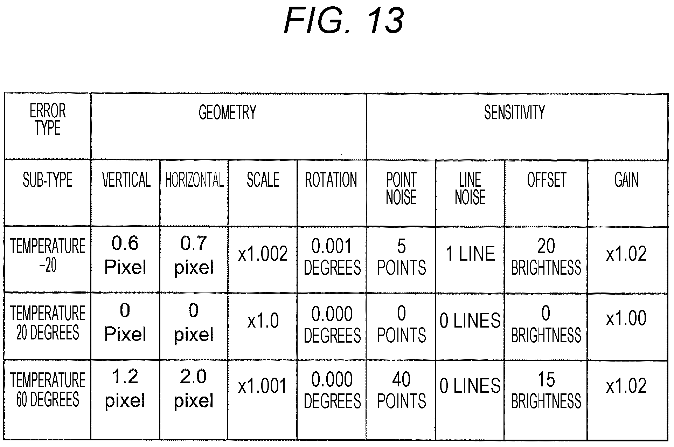

First, a temperature management unit 310 estimates the amount of parallelization error and sensitivity error occurring due to temperature change at this point. If the temperature while the cameras are being used is deviated from the temperature during the factory calibration, the influence of deformation on the housing of the cameras and sensitivity changes in the camera image sensors increase. If the factory calibration is ordinarily performed at a temperature of 20 degrees as a base of reference, as the temperature near the image sensors change, the increase in the geometry error and the sensitivity error is investigated in advance, and if a trend common to the cameras is observed, the amount of geometry error and the amount of sensitivity error that occur are estimated according to the temperature indicated by a thermometer disposed near the image sensors from the time of calibration to the time of camera use. FIG. 13 illustrates an example of the above. As an example, a case is illustrated in which a trend common to the cameras is recognized, and by correcting the 20-degree calibration results, all error is set to 0. Assume that with respect to geometry, the vertical displacement and the horizontal displacement are 0 pixels, while the scale and rotation are completely unaffected. Likewise, for the sensitivity error, the error of the image sensors is measured and completely corrected, and in the case of successfully performing imaging according to the anticipated specifications, the error becomes 0 like for the temperature of 20 degrees in FIG. 13. On the basis of data from 100 cameras from which the amount of increase in error when the temperature changes during travel is sampled in advance for the case of a low temperature of -20 degrees and a high temperature of 60 degrees, an average error value is computed, in addition, the trends are confirmed to be similar. In the case of successfully confirming similar trends, the table can be used as common data, and once sampling has been performed, it is possible to reuse the table without any particular measurements. The error when the temperature changes is summarized in the table of FIG. 13.

In addition, the table of FIG. 13 itself is still the same in cases where the amount of error due to temperature change changes greatly according to each individual camera, but by performing calibration at the factory in advance at temperatures other than the ordinary calibration temperature, such as at 60 degrees and at -20 degrees, error occurring at intermediate temperatures may be estimated by linear supplementation while error outside the measured temperatures may be estimated by extrapolation, and the occurrence of error in each individual camera may be estimated.

In this way, the amount of error that occurs is estimated by using the table of FIG. 13 as a base. However, even if there is individual variation among the cameras, the above is usable only in reproducible cases in which the same kind of error occurs in the same individual at the same temperature.

Next, a time management unit 320 is used to manage the total elapsed time since shipment from the factory or since a calibration or component maintenance at a dealer or the like, and thereby estimate the influence due to aging. For properties which are difficult to correct while traveling or without special facilities, such as degradation and discoloration of a lens, the total elapsed time is used as a base of reference to estimate the degree to which aging has progressed. Since increases in noise due to temperature change and the like are temporary and occur independently from aging, at this point a method of managing geometry error and sensitivity error without considering factors due to temperature change will be illustrated.

Separately from the above, issues such as misalignment of the left and right cameras and deformation of the camera structure due to aging are also corrected by the in-travel calibration, and therefore tend to be unrelated to the total elapsed time since shipment. For this reason, times are managed by the type of error, as illustrated in FIG. 13. For the total elapsed time, a common time is used for items marked with a circle to denote the same shared time. However, in cases where a camera is changed for repair, a camera whose total elapsed time and elapsed time since calibration have been reset is installed. Also, in cases where a camera is re-inspected for repair or the like, the managed times likewise may be reset in some cases. For the other error items, the amount of error is estimated on the basis of the elapsed time since calibration. For these items, a circle is marked in the field of the elapsed time since calibration. For these items, the time is reset when correction is performed by calibration, and therefore if the corrections by calibration work at different timings for each item, the timings when each item is or is not reset are also different. For example, in the case of calibrating only the geometry in the vertical direction, the other elapsed times since calibration are not reset and continue on, and only the elapsed time since calibration of the vertical geometry is reset. The same applies to the other items, which are designed such that if only the sensitivity offset is calibrated, the elapsed times since calibration of the other items are not reset. However, in a case where all external parameters related to geometry are calibrated at the same time, the vertical and horizontal positions, the rotation, and the scale of the cameras are all affected, and therefore in the case of such calibration, the elapsed times since calibration are reset according to the values rewritten by the calibration. In this case, the elapsed times since calibration for all geometry-related items are reset. For such items corrected by in-travel calibration, the time management unit manages the elapsed time since correction by the in-travel calibration for each individual item.

Next, by analyzing the unevenness of the road surface and analyzing time-series data of such unevenness, a track estimation unit 330 estimates whether the current travel conditions are an evenly paved road, an unpaved road, or an uneven road surface with depressions and fallen objects. By analyzing in advance how much the geometry conditions of the left and right cameras are affected by the estimated unevenness of the road surface, the influence on the geometry can be estimated.

For example, on a well-maintained road such as a highway, there is little geometry error due to vibration of the left and right cameras, and such error is also determined as negligible from the results of the left and right correspondence points. Conversely, in the case of an uneven road such as an ordinary street, if the road surface of the track is estimated while observing the results of the left and right correspondence points at the same time, the road is determined to have a rough road surface causing approximately 3 pixels of left and right geometry misalignment in the vertical direction every frame. In this case, the error is expected to occur every frame, and in the case in which a sufficient number of left and right correspondence points are obtained by the calibration-use correspondence point retrieval unit 200, the correction amount by which the in-travel calibration unit corrects the error does not correct the vibrational component, and the in-travel calibration unit only corrects by a correction value for the average of the vibration according to the time-series data. Conversely, to correct the vibration, the estimation result from the track estimation unit 330 and information about the left and right correspondence points are used by a simple geometry correction unit 360 to perform a simple correction for the current frame only. If the momentary difference between left and right is unclear, then like normally calibration is performed in the in-travel calibration unit 500 utilizing the time-series data rather than correcting one frame at a time, and the geometry correction table of the stereo camera unit 100 is edited by the geometry correction table generation unit 140 to thereby maintain the parallel state between the left and right cameras. However, the correction by the simple correction unit is simple, and some corrections cannot be accommodated by the simple correction, such as correction in the rotation direction and correction in the scale direction. For this reason, data about how much parallelization error occurs due to the track even when the simple correction is performed is acquired in advance, and on the basis of this data, an anticipated value of the geometry error that is like to occur given the current track is estimated.

Because a parallax image is obtained in the case of a stereo camera, the forward path of travel of the vehicle is estimated from the vehicle speed and the steering angle, and from parallax information about the area into which the vehicle is proceeding, the relative positional attitude of the road surface of the vehicle track and the body of the vehicle is measured in a time series, and a determination is made regarding whether the camera is being influenced by a situation such as continuous pitching of the body of the vehicle. In the case of a well-maintained track, there is little change in the relative positional attitude, and the parallax can also be detected stably. Conversely, in cases where the camera housing is cheap and pitching causes even the camera housing to deform, the influence of a reduction in parallax is also conceivable.

The simple geometry correction unit 360 performs only a simple geometry correction and is used in the case of performing geometry correction on the current frame only or on a fixed frame interval only, and does not make changes that would involve rewriting the geometry correction table itself. For this reason, basically vertical and horizontal corrections are performed, whereas complex corrections such as lens distortion are not performed. Obviously, the lens distortion does not deform momentarily because of momentary geometry misalignment, and therefore the simple geometry correction unit 360 is utilized as a correction unit that suppresses error caused by momentary vibrations.

Additionally, in a geometry error estimation unit 370, the correction amount momentarily corrected by the simple geometry correction unit 360 is subtracted from the total amount of error estimated by the temperature management unit 310, the time management unit 320, and the track estimation unit 330 to estimate a maximum amount of error that could occur in the current frame. Similarly to the error variation table in the case of temperature change illustrated in FIG. 13, the estimated amount of error may be managed separately by the type of geometry such as vertical, horizontal, scale, and rotation cases, or the estimated amount of error may be aggregated into just vertical and horizontal positional misalignment. Also, if the width of the vertical retrieval of the matching method is considered, the value may also be an estimated value of just the maximum amount of misalignment in the vertical direction.

Next, the sensitivity-related configuration will be described.

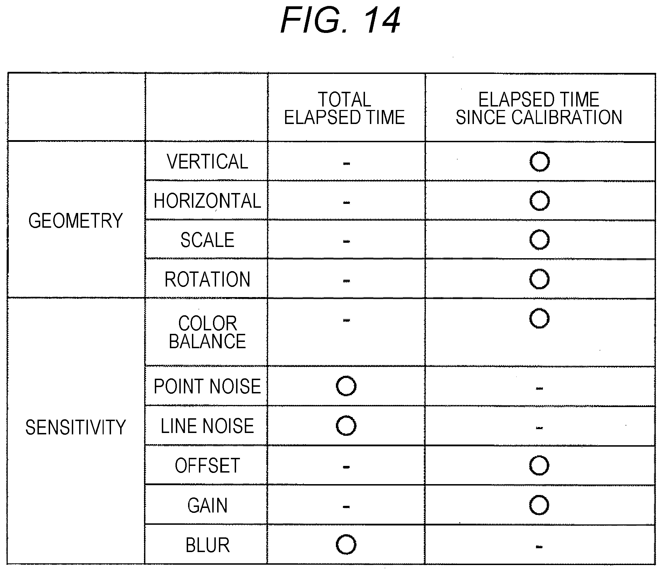

As described earlier, in the temperature management unit 310, the amount of error that occurs according to temperature is measured in advance, and the amount of sensitivity error is also estimated as illustrated in FIG. 14 on the basis of the temperature when the stereo camera is actually used. Furthermore, in the time management unit 320, lens degradation based on the total elapsed time is predicted and the elapsed time since in-travel calibration is measured for each type of noise, and the times are managed. With this arrangement, the amount of change in sensitivity based on the elapsed time is estimated.

Next, the light source environment estimation unit 340, which does not influence the geometry-related error, will be described. In the light source environment estimation unit 340, the noise conditions in the image are estimated according to the shutter speed and gain set by the exposure adjustment unit 120, the average brightness in each region of the image, and the like. As the shutter time becomes longer, the noise basically decreases, but even when the shutter is long, noise tends to increase in dark portions of the image, and therefore the amount of noise in the image is estimated by also using the average brightness in each region. Basically, the properties of the camera are investigated in advance, increases in noise depending on the shutter and gain are investigated for each type, and while the camera is being used, the amount of noise according to the adaptive exposure conditions at the time (shutter speed, gain, and ambient average brightness) are investigated. The amounts of noise based on the above are estimated according to type by the light source environment estimation unit 340.

In a weather estimation unit 350, weather conditions are predicted from the operating conditions of the windshield wipers, the outdoor air temperature, the fogging conditions of windshield according to another sensor, and a determination of rain droplet adhesion by a rain droplet sensor or the like, and it is determined whether the current conditions are conditions in which snow, rain, and the like tend to adhere. According to the result from the weather estimation unit 350, the possibility that left/right differences will occur in the sensitivity offset, gain, blur, or the like occurring during imaging by the camera is determined. In this case, unlike the other error estimation units, even if rain falls, it is difficult to estimate what kind of brightness offset, gain, blur, and the like will occur in which region and at which timing, and therefore at this point it is only determined that the possibility of such occurring is high.

In the simple sensitivity correction unit 380, simple corrections of the brightness offset, gain, and the like are performed mainly with respect to only sensitivity error that occurs over short periods. The somewhat long-term corrections based on temperature change, aging, and the like are handled in a basic manner by the in-travel calibration, while the simple sensitivity correction is performed only in cases such as when a sudden change in the light source environment occurs over a few frames. If the exposure conditions have changed stably, the change is dealt with by the in-travel calibration. The average brightness is monitored using the right image as a base of reference for exposure adjustment, but by similarly computing the average brightness for the left image as well, the difference between the left and right sensitivity is used as a basis to determine a correction amount.

In a sensitivity noise estimation unit 390, the amount of correction by the simple sensitivity correction unit 380 is subtracted from the total amount of error estimated by the temperature management unit 310, the time management unit 320, the light source environment estimation unit 340, and the weather estimation unit 350, and the result is estimated to be the current amount of sensitivity noise. Also, for the weather estimation unit 350, the possibility of sensitivity error is managed as information.

Herein, the error in the left and right cameras occurring in a stereo camera is managed, in addition, a limited error-minimizing process is performed, such as correcting only the vertical or horizontal offset in the case of geometry error, or correcting only the brightness offset or the brightness gain in the case of sensitivity error, for example. Additionally, error that could not be fully suppressed with the simple corrections in the current camera, error that is not yet handled by in-travel calibration, and the like are managed.

### <Matching unit>

Next, in a matching unit 400, a matching method that would allow more appropriate parallax information to be obtained is selected according to the estimation results of the geometry error and the sensitivity error estimated by the error management unit 300.

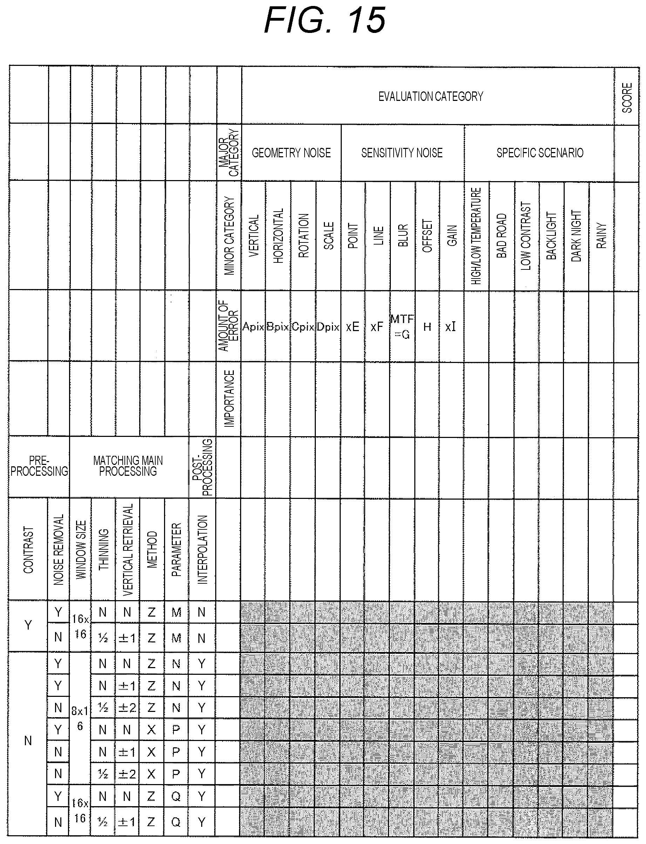

In a consolidated management unit 410, the amount of geometry error and sensitivity error in the current frame obtained from the error management unit 300 are managed according to each type. The amounts of error illustrated on the fourth row from the top in the matching consolidated management table of FIG. 15 are updated every frame. Also, in cases where the estimated amounts of error are obtained as direct information, it is sufficient to manage the total amount, but in cases of an index indicating the possibility that error may be occurring like with the result from the weather estimation unit, an amount of error prescribed in advance is assigned on the basis of the relative magnitude of the possibility and managed as the amount of error.

To reconstruct three-dimensionally, particularly in the case of a stereo camera, the left and right cameras are adjusted to be installed in parallel, but if error remains, or if the relative positional attitude between the left and right cameras becomes misaligned due to factors such as temperature, vibration, and aging during travel, this error becomes geometry noise. Four types of such geometry noise are estimated, namely vertical misalignment, horizontal misalignment, rotation, and scale. The geometry correction that takes calibration into account has three axes of position and three axes of rotation, but herein, the influence on matching is considered and used as evaluation criteria for selecting an appropriate matching method for each of the four types of geometry error. The vertical Apixel defined as an amount of error is indicated on the basis of an estimation that the pixel displaced the most in the image is Apixel. By this method of definition, the entire image is not vertically displaced by Apixel, but the worst value is Apixel. The same applies to B, C, and D. In the case of rotation and the like, the error at the locations where the displacement is the greatest, such as the edges and corners of the picture, is defined to be Cpixel. A similar method of definition is also applied to the horizontal direction and the scale.

Next, the sensitivity difference between the left and right cameras is defined according to type. Herein, amounts of noise are estimated and managed for five representative types of sensitivity error that affect matching. The types of sensitivity noise are point noise, line noise, blur, offset, and gain. Among these, point noise is point-shaped noise contained in the image, and is a phenomenon in which a brightness different from the surrounding pixels occurs even though an object of uniform brightness is being imaged. Such point-shaped noise increases in extremely dark conditions, such when imaging with increased gain or at extremely high or low temperatures. The amount of noise itself is estimated by the error management unit 300 with an understanding of the camera properties. The amount of point-shaped noise is mainly estimated by the error estimation based on the result from the temperature management unit 310 and the error estimation based on the exposure information from the light source environment estimation unit 340.

Next, line noise is noise that appears vertically in the image, and is a noise factor in which a brightness different from pixels on adjacent lines occurs only on a certain vertical line even though a plane of uniform brightness is being imaged. This noise is also known to occur under extreme temperature conditions and occurs in different amounts depending on the camera, which is considered by the temperature management unit 310 of the error management unit 300 to calculate the position and strength of the line noise.

Next, blur is a numerical value representing the sharpness of the image, like an out-of-focus lens, as a property of the resolution of the image. The error management unit 310 estimates the amount of error according to temperature changes and aging, and additionally from factors such as the adhesion of water droplets due to weather. Similarly to the other types of noise, the temperature management unit stores values of blur when the temperature changes in the table of FIG. 13, and this table is used as a base of reference to estimate the degree of blur according to the temperature. Similarly, with regard to aging, the amount of decline in the resolving power of the lens that occurs on the basis of the length of the total elapsed time is stored as data in a table, which is used as a base of reference to estimate the current amount of decline in resolving power. With regard to water droplet adhesion due to weather, analysis results of actual water droplet adhesion are stored in advance in a table, and in cases where such water droplet adhesion is determined as a possibility, it is determined that there is a possibility of blur corresponding to the amount stored in the table. These estimated amounts are used to estimate a value of blur indicating the resolving power of the lens in the current frame.

Next, the brightness offset and the brightness gain are respectively estimated from aging, temperature change, and the ambient light source environment including the exposure adjustment results. These estimations are basically similar in that the temperature properties are estimated on the basis of the amount of error according to temperature illustrated in FIG. 13, while for aging and the like, a table is similarly stored in advance as data and the amount of error is estimated on the basis of the current temperature and the total elapsed time. Conversely, regarding momentary error, estimated values of the sensitivity offset and the sensitivity gain are used on the basis of results from the sensitivity noise estimation unit of the error management unit.

In addition, the current traveling scenario is projected according to the results of the track estimation unit and the light source environment estimation unit, and to select a matching method best suited to the scenario, the specified scenario is evaluated to select a matching method similarly to the geometry noise and the sensitivity noise. In particular, the specified scenario is expressed by a weight from 0 to 10 of the scenario in which the vehicle is estimated to be traveling, with a weight of 10 indicating a strong influence on the selection of the matching method. By similarly weighting the sensitivity noise and the geometry noise, it is possible to decide which noise to attach importance to in the selection of the stereo matching method. In this Example, the properties of the camera are investigated to determine in advance whether large amounts of geometry noise occur readily in the stereo camera and geometry error greatly influences the parallax image obtained by stereo matching, or conversely whether large amounts of sensitivity noise occur readily and sensitivity error greatly influences the parallax image obtained by stereo matching. A balance is struck between the importance of geometry and sensitivity, in addition, the importance of each type of error is decided according to the frequency of occurrence and the amount of each type of error. Obviously, by changing this importance in real time according to the structure and properties of the stereo camera, it is possible to make adjustments that attach importance the evaluation results with respect to sensitivity noise or conversely make adjustments that attach importance to the evaluation results with respect to geometry noise, and thereby make more adaptive adjustments.

In this Example, to emphasize stability and the like, the importance of the geometry noise and the sensitivity noise is decided in advance before shipment at the factory or the like, and a method of changing only the importance of the specified scenario in real time is selected. In this way, the consolidated management unit 410 aggregates information about each of respective detailed types of geometry noise amount and sensitivity noise, and additionally about the importance of each of the sensitivity noise, geometry noise, and the specified scenario.

So far, the items arranged horizontally in the upper half of FIG. 15 have been described.

Next, the items arranged vertically in the left half of the table will be described. Here, the structural content of various matching methods that occupy the majority of the matching unit are illustrated, and the basic configuration of these matching methods are illustrated.

Each horizontal row represents a matching formula including pre-processing and post-processing for performing stereo matching on the current frame, and a sequential matching formula including pre-processing and post-processing indicated by a single horizontal row calculates scores indicating the degree of matching performance for the geometry noise, the sensitivity noise, and the specified scenario.

In each cell of a single horizontal row, first, in a case in which the line noise Apixel of the geometry noise has occurred, the score is filled into the cells from data evaluating the degree of matching performance in advance. If the amount of data is excessive when data about line noise is stored for all pixels, only scores in the case of error in predetermined pixels may be stored as data, and when estimating the error in between, a score may be calculated by interpolation.

In this way, scores are respectively calculated for each type of noise and filled in horizontally. In this case, next, the performance scores of the matching method are generated for geometry: horizontal noise: Bpixel, geometry: rotation: C: pixel, and geometry: scale: D: pixel. Because the scores indicating the matching performance are difference depending on the estimated amount of error, calculation becomes necessary every time the results of the estimated error change. Similarly, for the sensitivity noise, a score indicating the matching performance in the case in which the strength of point noise of the sensitivity noise becomes E times the normal strength is filled into a cell. Similarly, for the case of line noise: F times, blur MTF: G, sensitivity offset: H, and sensitivity gain: I times, an evaluation result for a matching method in the case in which such error is added is acquired in advance for that matching method, and the cells are made to reflect the degree of indicated matching performance in real time according to the estimated amount of error. By evaluating all matching methods in this way, scores are filled into the gray cells illustrated in FIG. 15.

Lastly, the scores are summed horizontally for each row to obtain a final combined assessment, and the highest-scoring method is determined as the most appropriate as the current matching method.

By calculating and totaling performance assessments of each sequential matching method with respect to the estimated error in this way, it becomes possible to select the matching method most appropriate to the estimated error that changes in real time, making it possible to obtain the stereo matching result with the best performance with respect to the currently occurring error state.

The matching methods including pre-processing and post-processing illustrated on respective horizontal rows will be described.

In this Example, a matching method is divided into pre-processing, matching main processing, and post-processing, and in addition, manages the on and off states of detailed processes. In the consolidated management unit, a noise removal filter and an invalid parallax determination in which 10 processes are always performed are not managed by the consolidated management unit of FIG. 15, but when actual stereo matching is executed, these processes are performed by a noise removal filter unit 442 and an invalid parallax determination unit 443.

The first method from the top of the table in FIG. 15 among the sequential matching methods including pre-processing and post-processing is a method that includes contrast correction, includes noise removal, has a stereo matching window size of 16×16, does not include thinning, has a matching method Z, has a parameter M, and does not include parallax supplementation. During this sequential matching method, a process of filling a cell with an assessment for the case in which the geometry noise, namely the geometry error in the vertical direction, is Apix is performed. Next, a process of filling a cell for the error in the horizontal direction is performed. In this way, cells can be filled in in order and an assessments of the method with respect to the estimated error can be calculated. Next, in the same way, in the case of a sequential matching method that includes contrast correction, does not include noise removal, has a stereo matching window size of 16×16, includes 1/2 thinning, has a vertical retrieval range of ±1, has a stereo matching method Z, has a parameter M, and does not include parallax supplementation, assessments with respect to the estimated error are provisionally calculated in a similar manner, a total assessment is calculated, and by comparing this assessment to the assessments of various matching methods, it is determined which matching method is more appropriate.

For example, regarding the two methods from the top in which contrast correction is performed, because these methods basically are strong at night, these methods are anticipated to be strong in conditions of high noise and low contrast, such as when the gain according to the exposure conditions is high, or when the camera temperature is at a high temperature or a low temperature. Also, if the relative size of the geometry error at this point is small, the first method that does not perform a stereo matching search vertically is efficient, whereas the second method performs a stereo matching search.

The methods in the third to fifth rows from the top are methods used basically when the sensitivity-related noise is low. Among these, as the vertical and horizontal noise in the geometry error increases, the fourth and fifth methods are methods that search for stereo matching in the vertical direction that tends to absorb geometry error.

Next, the methods on the sixth to the eighth rows that utilize the X stereo matching method are strong against rotation error and also relatively robust with respect to sensitivity error. These methods are relative strong in cases of increased error such as rotation error and scale error, and as the rotation error becomes larger, the seventh and eighth methods are robust since the stereo matching retrieval range is increased in the vertical direction. Lastly, the ninth and tenth methods return evaluation results that are strong in cases where the image is bright but with low contrast and noisy, and because a final parallax supplementation is performed, relatively robust experimental results are obtained. In this way, each sequential stereo matching method has different strengths and weaknesses with respect to types of error, and by performing an evaluation for each type of error in this way and selecting an optimal matching method as well as a combination of pre-processing and post-processing according to the estimated error occurring in the current frame, it becomes possible to select a more appropriate parallax image.

### (Pre-processing)

Pre-processing refers to processing performed before stereo matching to improve the stereo matching performance with respect to the left and right images, and is performed by a matching pre-processing unit 420. Contrast correction is mainly for nighttime, while noise removal is prepared for times of increased noise, such as at high temperatures, at low temperatures, and at night. A contrast correction unit 421 is prepared mainly for nighttime use, and performs a method of attaining an improved recognition rate by correcting the contrast of subjects that are hard to see due to a dark, low-contrast environment, such as white lines, signs, and pedestrians. Contrast correction is a process for making it easier to extract solid objects such as regions that are dark and hard to see. A noise removal unit 422 is prepared mainly to reduce point-shaped noise, and performs a process that restrains the brightness of a target pixel according to surrounding pixel information for pixels whose brightness changes greatly from the surroundings.

In this table, on/off combinations of all of the functions may be prepared, but in many cases actual in-vehicle hardware, CPU, and the like are constrained by cost, circuit size, processing time, and generated heat, and furthermore, when considering how to complete processing within the frame rate, if all of the functions are set in the time-intensive on direction, there is a concern that the processing will not be completed successfully within the prescribed processing time. For this reason, rather than preparing all combinations, recommended combinations may be narrowed down in advance during the design phase, such that the evaluations for this method group are performed in real time in the consolidated management units.

### (Main processing)

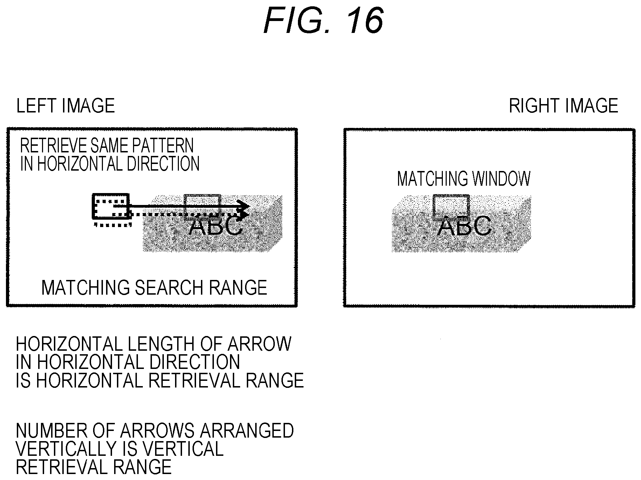

In a matching main processing unit 430, the main matching process of stereo matching is performed, but this process is performed after deciding various settings and the like before the matching process. First, vertical and horizontal search ranges are set by a vertical/horizontal retrieval range setting unit 431. FIG. 16 illustrates the basics of matching, and indicates the basic idea of the matching search range in which the length of the arrow in the horizontal direction is the horizontal retrieval range, while the number of arrows arranged vertically is the vertical retrieval range. A retrieval range of "±1" stated in the consolidated management unit 410 means that the arrows for the main horizontal retrieval are shifted by one pixel upward and downward to perform horizontal retrieval for a total of three arrows (pixels).

A matching method setting unit 432 makes operation preparations and the like for the matching method decided by the consolidated management unit 410. A score is calculated for each method on the basis of the amounts of error estimated for the matching methods Z and X, and the method is changed and used according to the assessment of the total.

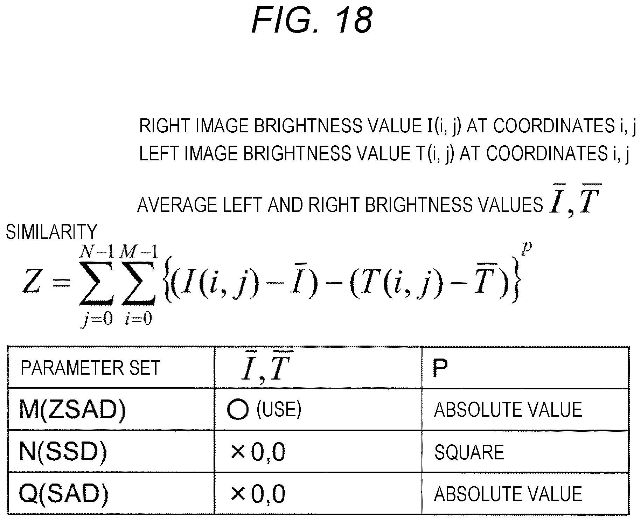

FIG. 18 illustrates the formula and parameter set of the matching method Z. The matching method Z is a method that compares brightness differences inside a matching window. However, the numerical formula changes slightly on the basis of the parameter set. In a parameter adjustment unit 435, the stereo matching parameters are adjusted. The parameters differ depending on the matching method in this Example, but FIG. 18 will be used to describe mainly parameter changes for the matching method Z that changes parameters. In the case of a parameter M, a method typically called ZSAD that subtracts the average brightness value of the left and right images, compares the brightness differences, and uses the comparison results as absolute values is used. For a parameter N, a method typically called SSD that treats the unused average brightness value of the left and right images as 0 and uses the squares of the brightness differences for brightness difference comparison is used. A parameter Q is handled with a method typically called SAD that treats the unused average brightness value of the left and right images as 0 and uses the absolute values of the brightness differences for brightness difference comparison.

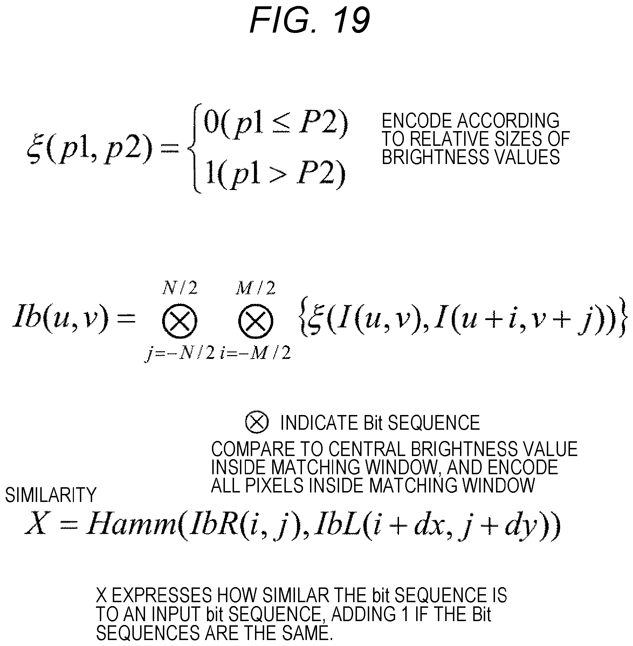

A matching method X is a method that handles only a parameter P set by default. The method is illustrated in FIG. 19. As the first formula from the top of FIG. 19 demonstrates, the brightness difference centered on the matching window is expressed as 0 or 1. As the second formula from the top of FIG. 19 demonstrates, all of the brightness information inside the window is expressed by bit sequences of 0s and 1s. Because the inside of the matching window corresponding to the left and right images is all expressed by bit sequences, the similarity between these bit sequences is calculated according to the Hamming distance. For bit sequences expressed by 0s and 1s, if individual bits are both 0 or both 1, the bit sequences are treated as similar and +1 is added, whereas if not, nothing is added. In this way, the method calculates the similarity of bit sequences to perform stereo matching. This method has a characteristic of significantly reducing the amount of data, and because the circuit size is also kept much smaller, the method is easily combined with other methods such as the noise removal method, contrast correction, and parallax interpolation.

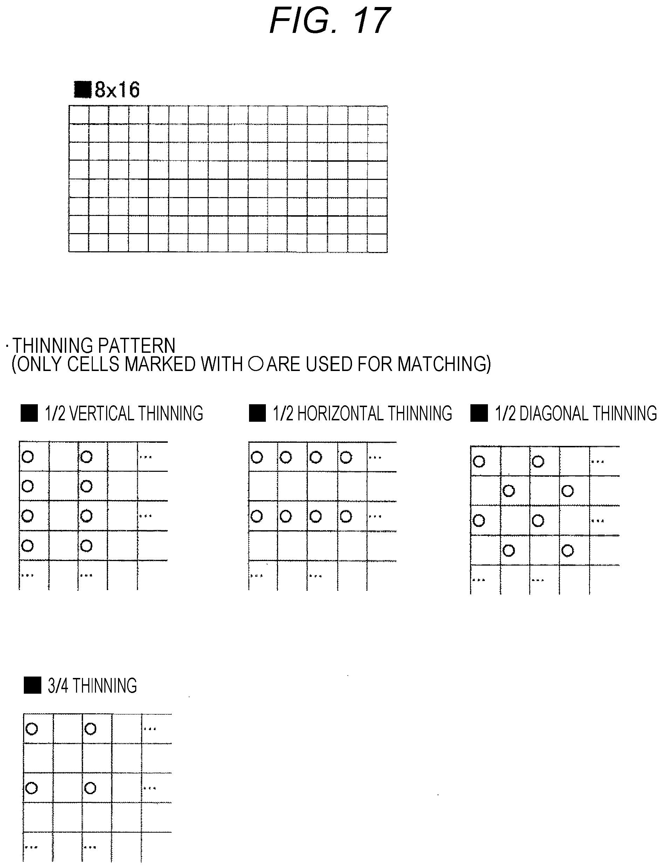

In a matching window size unit 433, the matching window size of the area surrounding a target pixel is decided to specify the pixels to use during stereo matching. In terms of FIG. 16, the numbers of vertical and horizontal pixels of the quadrilateral matching window in this Example are selected from the results of the consolidated management unit 410, using either 8×16 pixels or 16×16 pixels as a base size. A thinning unit 434 performs thinning in accordance with the results determined by the consolidated management unit 410 at this point. As illustrated in FIG. 17, the pixels used for matching are thinned inside the matching window size. As illustrated in FIG. 17, there are a variety of thinning methods even for the case of thinning pixels by the equivalent of 1/2. In this Example, the pattern used to thin pixels by 1/2 is 1/2 diagonal thinning, which has a good balance of vertical and horizontal pixels with a favorable pre-evaluation. Although not made available among the patterns of the consolidated management unit herein, thinning patterns such as 1/4 may also be used. Although different depending on the pattern of the target image, even when the same numbers of pixels for matching are used, using pixels over a wider range is often more stable, and when a predetermined processing time or circuit size is given, widening the matching window instead of thinning is an effective method of raising the stability of the matching performance. Alternatively, instead of thinning, absorbing geometry error by increasing the matching retrieval range in the vertical direction may be more effective overall in some cases.

In a matching processing unit 436, matching processing is executed according to the content set in the vertical/horizontal retrieval range setting unit 431, the matching method setting unit 432, the matching window size unit 433, the thinning unit 434, and the parameter adjustment unit 435 so far, and the results are saved.

### (Post-processing)

In a matching post-processing unit 440, post-processing is executed on a parallax image generated by the matching processing unit 436.

The consolidated management unit determines whether or not to execute a parallax interpolation process by a parallax interpolation processing unit 441 to switch between execution and non-execution in real time. The parallax interpolation process refers to a process of comparing the parallax values surrounding a target parallax, and changing the value of the target parallax according to the surrounding parallax values if the values are greatly different.

Otherwise, the noise removal filter unit 442 and the invalid parallax determination unit 443 also exist, but these units always perform processing and are not switched between execution and non-execution in real time, and therefore are excluded from management by the consolidated management unit 410. The noise removal filter is a filter that determines whether the matching similarity is sufficient enough to trust. To determine whether there are other highly similar portions other than the portion with the highest similarly among the matching results inside the search range, the current similarity is compared to a clearly different portion of the image and used as a reference to determine whether the portions could be considered similar. The invalid parallax determination unit 443 similarly checks whether or not the similarity is too low by comparing the most similar portion to an ordinary degree of matching as a reference to determine whether the similarity is too low to be trustworthy. If the similarity is higher than the reference, the result is determined as valid parallax, whereas if lower, the result is determined as invalid parallax.

### <In-travel calibration unit>

The in-travel calibration unit 500 performs calibration during travel. Although calibration is normally performed at the factory, consistency between the left and right cameras may be lost in some cases because of a variety of factors, such as cases where the precision is inadequate from the start, deformation caused by aging or temperature changes occurring in travel, sensitivity changes, as well as geometry error in the left and right cameras due to vibration. In the in-travel calibration unit 500, to suppress error that occurs during travel in this way, correction is performed by calibration during travel.

The time-series data management unit 510 manages data that serves as a basis for calibration. For geometry-related data, because geometry distortions in the left and right cameras that deform due to temperature change occur with fixed regularity, the amounts of deformations are saved for each temperature. Additionally, information about the temperature changing over time is acquired from the temperature management unit 310 and managed herein as time-series data. Correspondence points of the left and right cameras are acquired from the calibration-use correspondence point retrieval unit 200. Additionally, in order to improve reliability, accuracy, and stability, a geometry calibration unit 520 uses time-series correspondence point information to confirm that deforming is truly occurring, and uses information from the entire picture to perform calibration intended to improve accuracy.

The sensitivity calibration unit 530 performs sensitivity correction by using temperature information to confirm that the temperature of the left and right cameras has changed by a certain amount or greater and has continued for a certain amount of time. However, in both geometry calibration and sensitivity calibration, the error due to the temperature properties is not fully reproducible, and the temperature of the thermometer completely measuring the temperature of the deformed location and the image sensors, but instead measuring the temperature nearby, and therefore error occurs. For this reason, although a simple correction is performed by the in-travel calibration unit, error is only reduced for both the sensitivity error and the geometry error, and if the temperature is divergent from the temperature at the time of the factory calibration, the error is still large, and further error suppression is performed by changing the matching method.

Besides the above, sensitivity calibration also handles yellowing due to aging and the like, but since such error progresses only gradually and is also strongly dependent on each camera, the correction according to the sensitivity calibration is performed according to the aging time and additionally the continuously occurring sensitivity error in the error management unit 370. Because there are various types of error occurring in the left and right cameras in this way, the error that can be absorbed by the in-travel calibration is suppressed by the in-travel calibration, and two error countermeasures that absorb the remaining error factors through matching are performed. With this arrangement, the loss of parallax information and drop in parallax precision that ordinarily occur when error occurs in the left and right cameras can be reduced as much as possible, and highly dense and precise parallax information can be obtained. The execution management unit 540 executes calibration after confirming that the results from the geometry calibration unit 520 are not extremely different from previous values and are within the range of normal occurrence and the like, and corrects the geometry correction table generation unit 140 of the stereo camera unit 100. Similarly, in the case of sensitivity calibration, calibration is executed after confirming that the results are not extremely different from previous values and are within the range of normal occurrence and the like, and the correction values in the sensitivity correction unit 130 of the stereo camera unit 100 are rewritten. Additionally, this information is also passed to the error management unit 300 and used to manage residual error.

### <Object detection unit>

The object detection unit 600 uses the parallax image generated by the matching unit above as a base of reference to perform lane recognition, road surface estimation, solid object extraction, and pattern identification for identifying pedestrians and vehicles.

A lane recognition unit 610 uses an input brightness image from the right camera and the parallax image to detect the white lines of the track of the vehicle itself. By detecting the white lines to the left and right in the image, the intersection point of the left and right lane markings at infinity is computed. By performing the above in both the left and right cameras, the reliability of recognition is improved, in addition, the information is also usable for the correction of geometry misalignment between the left and right cameras. This information may also be used for geometry correction of the left and right cameras by the simple geometry correction unit 360 and the geometry calibration unit 520.

A road surface estimation unit 620 uses the parallax information to analyze the parallax on the forward path of the vehicle itself, which is used to estimate the slope and height of the track of the vehicle itself. On the basis of the road surface estimation result, a solid object extraction unit 630 extracts solid objects existing on top of the road surface.

A pattern identification unit 640 performs pattern matching on each solid object extracted by the solid object extraction unit 630 to determine whether each solid object is a pedestrian or a vehicle using the pattern identification unit 640.

For a vehicle identified by pattern matching, the position in the images from the left and cameras can be specified, and because the same object appears in the left and right image regions, if the sensitivity correction is complete, the brightness distributions of the regions should be exactly the same. This information may be used to perform sensitivity correction of the left and right cameras by the simple sensitivity correction unit 380 and the sensitivity calibration unit 530.

### <Warning control unit>

The control unit 700 performs warning and control for improving safety and convenience according to the results of lanes, pedestrians, vehicles, and any other solid objects detected by the object detection unit 600. First, with regard to the results of lane recognition, to enable the user to freely choose between performing control, issuing a warning, or putting the warning control unit in a non-operating state, operation is switched between warning and control on the basis of a user setting. When issuing a warning about the lane recognition result, a warning unit 710 sounds an alarm in cases where the vehicle is likely to deviate from the lane according to the lane recognition result and a result of estimating the movements of the vehicle itself. When controlling the vehicle according to the lane recognition result, a control unit 720 controls the vehicle in the horizontal direction to keep the vehicle from going outside the lane, on the basis of the lane recognition result and the movements of the vehicle itself.

In the case in a solid object is a pedestrian or a vehicle, warning or control is performed on the basis of the position and speed of the solid object and the forward path and estimated collision time of the vehicle itself. In cases where collision with a solid object is highly likely, a warning is issued, and if the vehicle gets even closer to the solid object and collision is determined as imminent, control of the vehicle is performed.

It is possible for the user to turn warning and control on or off.

A give-up unit 730 causes the entire system to give up in cases where the geometry error or the sensitivity error of the left and right cameras exceeds a permissible range on the basis of the results from the error management unit 300.

Conversely, the give-up is also canceled or the like if it can be determined that, for example, a camera at high temperature has cooled down and stably returned to a normal temperature.

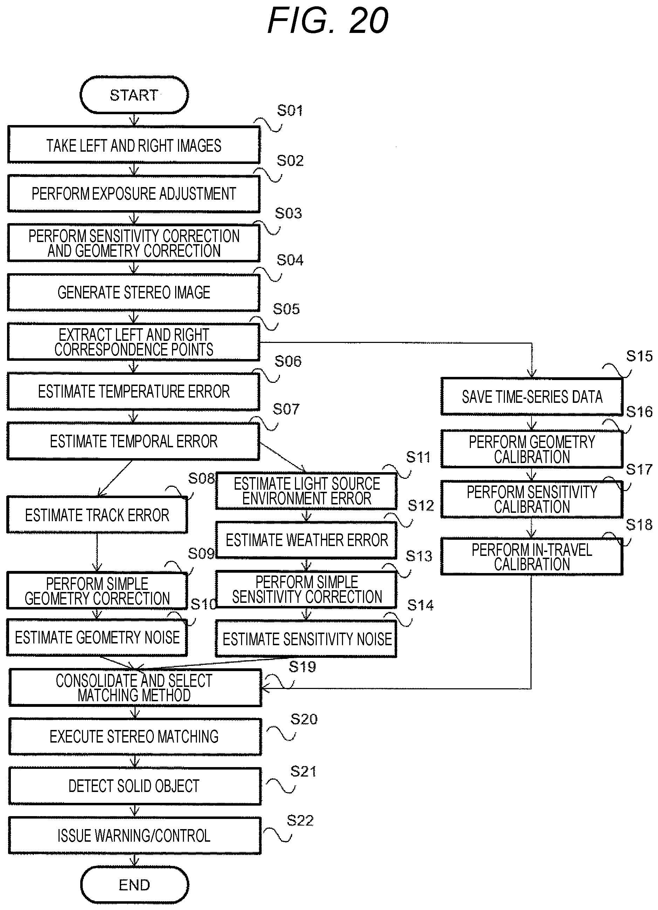

### <Process flowchart of FIG. 20>

S01
First, left and right images are taken with the stereo camera.

S02
Analysis centered on the right image is performed, and exposure adjustment of the shutter speed and the gain is performed.

S03
The amount of geometry correction based on the factory calibration result or the in-travel calibration result is calculated. Pre-correction preparations are also performed.

S04
An image for stereo vision is generated.

S05
Left and right correspondence points are extracted from the left and right images. Left and right correspondence points are used to measure the left and right geometry error.

The left and right correspondence points are also usable for momentary correction, and are used in the simple geometry correction of S09 in which error remains after the simple correction.

For long-term correction, the time series of correspondence points with good accuracy but unable to handle momentary geometry distortions are used in the in-travel geometry calibration of S16.

S06
The temperature error is estimated. The temperature measured by the thermometer near the image sensors is used to estimate the amounts of geometry error and sensitivity error based on the temperature.

S07
The temporal error is estimated. Temporal sensitivity and geometry error occurring due to aging and the like is estimated.

S08
Geometry error such as vibrations occurring in the cameras from the track is estimated.

S09
In the simple geometry correction, because editing the images at this point has a high processing load, and the second instance of image editing would lead to image degradation and increases in the processing load, rather than performing a six-axis geometry correction, only the easily correctable vertical and horizontal geometry corrections are performed.

S10
The amount of error corrected by the simple geometry correction is calculated from the total amount of estimated geometry noise, and in addition, the geometry error in the case of applying the correction by the in-travel calibration is also estimated.

S11
In the light source environment error estimation, the amount of sensitivity noise in the images anticipated from exposure conditions, brightness values in the images is estimated.

S12
The weather is predicted, and it is estimated whether or not phenomena such as blur occur due to water droplets adhering to the windshield during rainy weather and the like.

S13
In the simple sensitivity correction, only the left and right sensitivity offset and gain offset are corrected.

S14
In the estimation of the sensitivity noise, the amount of sensitivity error is estimated by subtracting the amount corrected by the simple correction from the total estimated amount of sensitivity noise.

S15
The time-series data of left and right correspondence points is saved and utilized for the average brightness of the left and right images measured by the exposure adjustment unit.

S16
By utilizing the time-series data of the left and right correspondence points, left and right correspondence points that are distributed throughout the image and the three-dimensional space are used to perform the geometry calibration. When the time-series data is used herein, it is determined in advance whether vibration is occurring or not occurring in each frame.

S17
In the sensitivity calibration, the shutter and gain have been evened out between the left and right images, but the conditions of the actual brightness distributions in the images are analyzed. For this reason, whether the sensitivity offset and gain needs correction and the amounts of such correction are estimated according to the brightness distributions of the left and right images.

S18
In cases where the geometry error and sensitivity error occur stably over time and are also confirmed to be occurring with high confidence, correction is performed as the in-travel calibration.

Also, in cases where there is geometry error but vibration is also occurring in the left and right cameras every frame, it is confirmed that vibration is occurring, and in addition, correction is performed by estimating the amount of geometry error to be at the center of the vibration.

S19
The most appropriate matching method for the estimated values of the geometry error and the sensitivity error is calculated by calculating and totaling the scores in the respective cells of the table illustrated in FIG. 16 to obtain an assessment. The best-scoring method is selected.

S20
The selected stereo matching method is used to execute stereo matching.

S21
Lane recognition, road surface estimation, solid object extraction, and pattern identification are performed.

S22
The above recognition results are used to perform warning and control related to preventative safety.

According to vehicle-mounted environment recognition device of the Example described above, when a three-dimensional shape is analyzed by stereo matching, error in the computed three-dimensional shape may be measured due to texture disparity inside the matching window. For this reason, a matching window in which error occurs is specified by analyzing texture inside the matching window, and to suppress the influence due to this error, measurement points are removed, detailed measurement that subdivides the matching window, or correction of the measurement points is performed, and on the basis of the measurement result, a warning, speed control, and suspension control are performed.

The vehicle-mounted surrounding environment recognition device according to this Example can be expressed as follows.

The vehicle-mounted surrounding environment recognition device including an imaging unit, includes an error management unit that estimates error in the imaging unit when obtaining a three-dimensional shape on a basis of viewpoints of the imaging unit, and a matching unit that selects a matching method according to a result of the estimation by the error management unit.

In addition, the error management unit manages types and amounts of error.

In addition, the types of error include geometry error, and the geometry error includes one of a vertical position, a horizontal position, a rotation, and a scale.

In addition, the types of error include sensitivity error, and the sensitivity error includes one of a point noise, a line noise, a blur, a sensitivity offset, and a sensitivity gain.

In addition, left and right imaging units are included, the geometry error is corrected by left and right correspondence points or line information with left and right correspondence, an amount of error remaining after the correction is estimated by the error management unit, and a stereo matching process including the amount of error in a vertical direction is performed.

In addition, left and right imaging units are included, the geometry error is estimated from left and right correspondence points imaged by the left and right imaging units, and an occurrence of time-dependent distortion or vibration is specified.

In addition, the amounts of error are categorized into an amount of error and an amount of long-term error, for the amount of long-term error, left and right correspondence point data is utilized to correct error by calibration and reduce residual error, while for the short-term error and the residual error, correction of the geometry error in a vertical direction and a horizontal direction is performed, and the stereo matching process to apply to the geometry error is selected and executed from among a plurality of stereo matching processes.

In addition, a temperature change of an image sensor is predicted on a basis of a temperature sensor built into the imaging unit, and the error management unit estimates the error on a basis of the temperature predicted by the temperature sensor.

In addition, a road surface conditions estimation unit that estimates an unevenness of a surface of a track, and estimates the geometry error.

In addition, the sensitivity error is predicted on a basis of exposure information about the imaging unit.

In addition, the matching method changes at least one of a contrast correction, a noise removal, a matching window size, a thinning inside a matching window, a retrieval range, a matching method, a parameter, and a parallax interpolation.

According to the vehicle-mounted environment recognition device of this Example, when a plurality of cameras mounted to a vehicle are used to reconstruct a three-dimensional shape, relative geometry error and sensitivity error between the plurality of cameras that change over time are managed such that error occurring over the long term is suppressed by calibration, while for the residual error, a matching method acceptable to the residual error is selected, thereby making it possible to reconstruct a high-density three-dimensional shape with high precision, and to improve the recognition rate of an object recognized on the basis thereof.

### Reference Signs List

- 100: stereo camera unit
- 110: imaging unit
- 120: exposure adjustment unit
- 130: sensitivity correction unit
- 140: geometry correction table generation unit
- 150: stereo image generation unit
- 200: calibration-use correspondence point retrieval unit
- 210: processing region decision unit
- 220: left/right feature point extraction unit
- 230: correspondence point extraction unit
- 240: noise removal unit
- 300: error management unit (geometry and sensitivity)
- 310: temperature management unit
- 320: time management unit
- 330: track estimation unit
- 340: light source environment estimation unit
- 350: weather estimation unit
- 360: simple geometry correction unit
- 370: parallelization error estimation unit
- 380: simple sensitivity correction unit
- 390: sensitivity noise estimation unit
- 400: matching unit
- 410: consolidated management unit
- 420: matching pre-processing unit
- 421: contrast correction unit
- 422: noise removal unit
- 423: sensitivity correction unit
- 430: matching main processing unit
- 431: vertical/horizontal retrieval range setting unit
- 432: matching method setting unit
- 433: matching window size unit
- 434: thinning pattern setting unit
- 435: parameter adjustment unit
- 436: matching processing unit
- 440: matching post-processing unit
- 441: parallax interpolation processing unit
- 442: noise removal filter unit
- 443: invalid parallax determination unit
- 500: in-travel calibration unit
- 510: time-series data management unit
- 520: geometry calibration unit
- 530: sensitivity calibration unit
- 540: execution management unit
- 600: object detection unit
- 610: lane recognition unit
- 620: road surface estimation unit
- 630: solid object extraction unit
- 640: pattern identification unit
- 700: warning control unit
- 710: warning unit
- 720: control unit
- 730: give-up unit

## Claims

1. A vehicle-mounted surrounding environment recognition device including a stereo camera unit (100) that comprises a left imaging unit and a right imaging unit, each of said imaging units configured to render images of an imaged three-dimensional shape, comprising:
an error management unit (300) and
a stereo matching unit (400) for stereo-matching the images obtained by the left imaging unit and by the right imaging unit,
**characterized in that**
the error management unit (300) is configured to estimate types and amounts of errors in images obtained by the left imaging unit and by the right imaging unit of an imaged three-dimensional shape on a basis of the viewpoints of the left imaging unit and of the right imaging unit; and
the stereo matching unit (400) is configured to select one of plural stereo matching methods according to a result of the error estimation by the error management unit,
wherein the types of error estimated in the error management unit (300) include a sensitivity error, and the sensitivity error includes one of a point noise, a line noise, a blur, a sensitivity offset, and a sensitivity gain, and
wherein the selected stereo matching method is configured to change at least one of a contrast correction, a noise removal, a matching window size, a thinning inside a matching window, a retrieval range, a matching method, a parameter, and a parallax interpolation.

2. The vehicle-mounted surrounding environment recognition device according to claim 1, wherein the types of error include geometry error, and the geometry error includes one of a vertical position, a horizontal position, a rotation, and a scale.

3. The vehicle-mounted surrounding environment recognition device according to claim 2, wherein the device is configured to correct the geometry error with reference to left and right correspondence points included in images obtained from the left imaging unit and from the right imaging unit or line information with left and right correspondence, and to estimate by the error management unit (300) an amount of error remaining after the correction , and to perform a stereo matching process including the amount of error in a vertical direction.

4. The vehicle-mounted surrounding environment recognition device according to claim 2, configured to estimate the geometry error from left and right correspondence points imaged by the left and right imaging units, and to specify an occurrence of time-dependent distortion or vibration.

5. The vehicle-mounted surrounding environment recognition device according to claim 4, configured
to categorize the amounts of error into an amount of short-term error and an amount of long-term error,
to utilize, for the amount of long-term error, left and right correspondence point data to correct error by calibration and reduce residual error,
to perform for the short-term error and the residual error, correction of the geometry error in a vertical direction and a horizontal direction, and
to select the stereo matching process to be applied to the geometry error from among a plurality of stereo matching processes and execute it.

6. The vehicle-mounted surrounding environment recognition device according to claim 1, configured to predict a temperature change of an image sensor on a basis of a temperature sensor built into the imaging unit,
wherein the error management unit is configured to estimate the error on a basis of the temperature predicted by the temperature sensor.

7. The vehicle-mounted surrounding environment recognition device according to claim 2, further comprising: a road surface conditions estimation unit configured to estimate an unevenness of a surface of a track, and to estimate the geometry error.

8. The vehicle-mounted surrounding environment recognition device according to claim 1, configured to predict the sensitivity error on a basis of exposure information about the imaging unit.

## Patentansprüche

1. Fahrzeugmontierte Umgebungserkennungsvorrichtung, die eine Stereokameraeinheit (100) umfasst, welche eine linke Bildaufnahmeeinheit und eine rechte Bildaufnahmeeinheit umfasst, wobei jede der Bildaufnahmeeinheiten so ausgebildet ist, dass sie Bilder einer erfassten dreidimensionalen Form wiedergibt, umfassend:
eine Fehlerverwaltungseinheit (300) und
eine Stereoabgleichseinheit (400) zum Stereoabgleich der von der linken und der rechten Bildaufnahmeeinheit erhaltenen Bilder,
**dadurch gekennzeichnet, dass**
die Fehlerverwaltungseinheit (300) so ausgebildet ist, dass sie Arten und Ausmaße von Fehlern in Bildern, die von der linken Bildaufnahmeeinheit und der rechten Bildaufnahmeeinheit einer abgebildeten dreidimensionalen Form aufgenommen wurden, auf der Grundlage der Blickpunkte der linken Bildaufnahmeeinheit und der rechten Bildaufnahmeeinheit abschätzt; und
die Stereoabgleichseinheit (400) so ausgebildet ist, dass sie entsprechend einem Ergebnis der Fehlerschätzung durch die Fehlerverwaltungseinheit eines von mehreren Stereoabgleichverfahren auswählt,
wobei die in der Fehlerverwaltungseinheit (300) geschätzten Fehlerarten einen Empfindlichkeitsfehler umfassen und der Empfindlichkeitsfehler eines von Punktrauschen, Zeilenrauschen, Unschärfe, Empfindlichkeitsversatz und Empfindlichkeitsverstärkung umfasst,
und
wobei das ausgewählte Stereoabgleichverfahren so ausgebildet ist, dass es mindestens eines von einer Kontrastkorrektur, einer Rauschunterdrückung, einer Abgleichfenstergröße, einer Ausdünnung innerhalb eines Abgleichfensters, einem Abrufbereich, einem Abgleichverfahren, einem Parameter und einer Parallaxeninterpolation ändert.

2. Fahrzeugmontierte Umgebungserkennungsvorrichtung nach Anspruch 1, wobei die Fehlerarten Geometriefehler umfassen und der Geometriefehler eines von einer vertikalen Position, einer horizontalen Position, einer Drehung und einer Skalierung umfasst.

3. Fahrzeugmontierte Umgebungserkennungsvorrichtung nach Anspruch 2, wobei die Vorrichtung so ausgebildet ist, dass sie den Geometriefehler unter Bezugnahme auf linke und rechte Korrespondenzpunkte, die in den von der linken und der rechten Bildaufnahmeeinheit erhaltenen Bildern enthalten sind, oder auf Linieninformationen mit linker und rechter Korrespondenz korrigiert, und dass die Fehlerverwaltungseinheit (300) ein nach der Korrektur verbleibendes Fehlermaß schätzt und einen Stereoabgleichprozess durchführt, der das Fehlermaß in vertikaler Richtung umfasst.

4. Fahrzeugmontierte Umgebungserkennungsvorrichtung nach Anspruch 2, die dazu ausgebildet ist, den Geometriefehler anhand von linken und rechten Korrespondenzpunkten zu schätzen, die von der linken und der rechten Bildaufnahmeeinheit abgebildet werden, und das Auftreten einer zeitabhängigen Verzerrung oder Vibration festzustellen.

5. Fahrzeugmontierte Umgebungserkennungsvorrichtung nach Anspruch 4, die so ausgebildet ist,
die Fehlergrößen in eine Größe eines kurzfristigen Fehlers und eine Größe eines langfristigen Fehlers zu kategorisieren,
die Daten der linken und rechten Korrespondenzpunkte für den Umfang des Langzeitfehlers zu nutzen, um den Fehler durch Kalibrierung zu korrigieren und den Restfehler zu verringern,
für den kurzfristigen Fehler und den Restfehler eine Korrektur des Geometriefehlers in vertikaler und horizontaler Richtung durchzuführen und
aus einer Vielzahl von Stereoabgleichprozessen den auf den Geometriefehler anzuwendenden Stereoabgleichprozess auszuwählen und diesen auszuführen.

6. Fahrzeugmontierte Umgebungserkennungsvorrichtung nach Anspruch 1, die so ausgebildet ist, dass sie eine Temperaturänderung eines Bildsensors auf der Grundlage eines in die Bildaufnahmeeinheit integrierten Temperatursensors vorhersagt,
wobei die Fehlerverwaltungseinheit so ausgebildet ist, dass sie den Fehler auf der Grundlage der vom Temperatursensor vorhergesagten Temperatur abschätzt.

7. Fahrzeugmontierte Umgebungserkennungsvorrichtung nach Anspruch 2, die ferner eine Einheit zur Abschätzung des Straßenbelagszustands umfasst, die dazu ausgebildet ist, eine Unebenheit einer Oberfläche einer Fahrbahn abzuschätzen und den Geometriefehler abzuschätzen.

8. Fahrzeugmontierte Umgebungserkennungsvorrichtung nach Anspruch 1, die so ausgebildet ist, dass sie den Empfindlichkeitsfehler auf der Grundlage von Belichtungsinformationen der Bildaufnahmeeinheit vorhersagt.

## Revendications

1. Dispositif de reconnaissance de l'environnement ambiant monté sur un véhicule, comprenant une unité de caméra stéréoscopique (100) qui comprend une unité d'imagerie gauche et une unité d'imagerie droite, chacune desdites unités d'imagerie étant configurée pour restituer des images d'une forme tridimensionnelle capturée, comprenant :
une unité de gestion des erreurs (300) et
une unité de correspondance stéréoscopique (400) destinée à effectuer une correspondance stéréoscopique entre les images obtenues par l'unité d'imagerie gauche et par l'unité d'imagerie droite,
**caractérisé en ce que**
l'unité de gestion des erreurs (300) est configurée pour estimer les types et les amplitudes des erreurs présentes dans les images obtenues par l'unité d'imagerie gauche et par l'unité d'imagerie droite d'une forme tridimensionnelle capturée, sur la base des points de vue de l'unité d'imagerie gauche et de l'unité d'imagerie droite ; et
l'unité de correspondance stéréoscopique (400) est configurée pour sélectionner l'une parmi plusieurs méthodes de correspondance stéréoscopique en fonction du résultat de l'estimation d'erreur effectuée par l'unité de gestion des erreurs,
dans lequel les types d'erreurs estimés dans l'unité de gestion des erreurs (300) comprennent une erreur de sensibilité, et l'erreur de sensibilité comprend l'un des éléments suivants : un bruit ponctuel, un bruit linéaire, un flou, un décalage de sensibilité et un gain de sensibilité,
et
dans lequel la méthode de correspondance stéréoscopique sélectionnée est configurée pour modifier au moins l'un des éléments suivants : une correction de contraste, une suppression du bruit, une taille de fenêtre de correspondance, un amincissement à l'intérieur d'une fenêtre de correspondance, une plage de récupération, une méthode de correspondance, un paramètre et une interpolation de parallaxe.

2. Dispositif de reconnaissance de l'environnement ambiant monté sur un véhicule selon la revendication 1, dans lequel les types d'erreurs comprennent une erreur de géométrie, et l'erreur de géométrie comprend l'un des éléments suivants : une position verticale, une position horizontale, une rotation et une échelle.

3. Dispositif de reconnaissance de l'environnement ambiant monté sur un véhicule selon la revendication 2, dans lequel le dispositif est configuré pour corriger l'erreur géométrique en se référant à des points de correspondance gauche et droit inclus dans les images obtenues à partir de l'unité d'imagerie gauche et de l'unité d'imagerie droite ou à des informations de ligne présentant une correspondance gauche-droite, et pour estimer, par l'unité de gestion des erreurs (300), une amplitude d'erreur résiduelle après la correction, et pour effectuer un processus de correspondance stéréoscopique tenant compte de cette amplitude d'erreur dans une direction verticale.

4. Dispositif de reconnaissance de l'environnement ambiant monté sur un véhicule selon la revendication 2, configuré pour estimer l'erreur géométrique à partir des points de correspondance gauche et droit capturés par les unités d'imagerie gauche et droite, et pour signaler l'apparition d'une distorsion ou d'une vibration dépendante du temps.

5. Dispositif de reconnaissance de l'environnement ambiant monté sur un véhicule selon la revendication 4, configuré
pour classer les amplitudes d'erreur en une amplitude d'erreur à court terme et une amplitude d'erreur à long terme,
utiliser, pour l'erreur à long terme, les données des points de correspondance gauche et droit afin de corriger l'erreur par étalonnage et de réduire l'erreur résiduelle,
effectuer, pour l'erreur à court terme et l'erreur résiduelle, une correction de l'erreur géométrique dans les directions verticale et horizontale, et
sélectionner, parmi une pluralité de processus de correspondance stéréoscopique, le processus de correspondance stéréoscopique à appliquer à l'erreur géométrique et l'exécuter.

6. Dispositif de reconnaissance de l'environnement ambiant monté sur un véhicule selon la revendication 1, configuré pour prédire une variation de température d'un capteur d'image sur la base d'un capteur de température intégré à l'unité d'imagerie,
dans lequel l'unité de gestion des erreurs est configurée pour estimer l'erreur sur la base de la température prédite par le capteur de température.

7. Dispositif de reconnaissance de l'environnement ambiant monté sur un véhicule selon la revendication 2, comprenant en outre une unité d'estimation de l'état de la chaussée configurée pour estimer l'irrégularité de la surface d'une voie et pour estimer l'erreur géométrique.

8. Dispositif de reconnaissance de l'environnement ambiant monté sur un véhicule selon la revendication 1, configuré pour prédire l'erreur de sensibilité sur la base d'informations d'exposition concernant l'unité d'imagerie.
